# DEMANDE DE BREVET EUROPEEN

(11) **EP 4 187 665 A2**
(43) Date de publication de la demande: **31.05.2023**
(21) Numéro de dépôt: 22210079.4
(22) Date de dépôt: 29.11.2022
(51) Int. Cl.: H01M 10/04

(54) **DISPOSITIF ET PROCÉDÉ DE CONTENTION POUR MODULE D ACCUMULATEUR ÉLECTROCHIMIQUE À PLAQUES DE CONTENTION**

(30) Priorité: 29.11.2021 FR 2112638
(71) Demandeur: Commissariat à l'énergie atomique et aux énergies alternatives, 75015 Paris (FR)
(72) Inventeur: DE PAOLI, Lionel, 38054 GRENOBLE Cedex 09 (FR); DREVARD, Pascal, 38054 GRENOBLE cedex 09 (FR); MEE, Fabrice, 38054 GRENOBLE cedex 09 (FR); MENARD, Zacharie, 38054 GRENOBLE cedex 09 (FR)
(74) Mandataire: INNOV-GROUP

(57) **Abrégé**

Dispositif de contention pour module d'accumulateur (1) électrochimique prismatique ou en sachets souples, ce dispositif de contention comportant une première plaque de contention (4), une deuxième plaque de contention (5), un lien de cerclage (3), et un mécanisme de serrage (6). Le lien de cerclage (3) comporte au moins une boucle de matériau souple qui comprend une portion centrale (15) formée de deux brins (16,17), et deux portions d'extrémité formant un premier coude d'attache (18) et un deuxième coude d'attache (19). Le mécanisme de serrage (6) comporte deux terminaux de maintien (7,8), chaque coude d'attache (18,19) étant crocheté sur un desdits terminaux de maintien (7,8), au moins l'un des coudes d'attache (18,19) étant monté sur un charriot mobile (11) .

## Description

### DOMAINE TECHNIQUE

L'invention concerne le domaine du stockage d'énergie électrique et vise les techniques de contention nécessaires pour la mise en œuvre des accumulateurs électrochimiques prismatiques ou en sachets souples, qu'ils soient embarqués dans des véhicules ou stationnaires.

### ART ANTÉRIEUR

Certains accumulateurs électrochimiques prismatiques, agencés dans des contenants souples ou rigides, nécessitent l'application d'une force de compression sur leurs faces latérales afin d'empêcher la délamination des couches internes, ce qui dégraderait la durée de vie et les performances de ces accumulateurs.

Le document US8054041 décrit un dispositif de contention pour accumulateur électrochimique, comportant une sangle et un dispositif de mise en tension de type ridoir permettant de rapprocher par serrage les deux extrémités de la sangle et exercer ainsi une contention sur l'accumulateur.

On connait par ailleurs des moyens mécaniques de mise en contention consistant en des tirants transversaux au module d'accumulateur et adaptés à serrer mutuellement deux plaques de contention appliquées sur les faces latérales du module. Ces tirants peuvent être soudés ou vissés sur les plaques latérales. Ces solutions permettent d'exercer une force de serrage plus importante que les solutions impliquant une sangle et sont donc plus adaptées aux accumulateurs électrochimiques récents. Cependant, ces solutions sont couteuses, difficiles à mettre en place et sont peu flexibles, le démontage de l'accumulateur électrochimique devenant difficile, voire impossible.

Le document DE4226428 décrit également un module d'accumulateur équipé de deux plaques de contention serrées par des sangles de cerclage. Les plaques de contention sont bombées et les sangles de cerclage déforment ces plaques en comprimant le module d'accumulateur.

### EXPOSÉ DE L'INVENTION

L'invention a pour but d'améliorer les moyens de contention pour accumulateurs électrochimiques de l'art antérieur.

À cet effet, l'invention vise un dispositif de contention pour module d'accumulateur électrochimique prismatique ou en sachets souples, conforme à la revendication 1.

Selon un autre objet, l'invention vise un module d'accumulateur électrochimique prismatique ou en sachets souples, caractérisé en ce qu'il comporte un dispositif de contention tel que décrit ci-dessus.

Le dispositif et le procédé selon l'invention permettent l'utilisation d'un lien de cerclage même dans le cas des accumulateurs électrochimiques récents qui requièrent l'exercice d'une importante force de serrage sur leurs faces latérales. Le mécanisme de serrage permet la mise en tension contrôlée du lien de cerclage, même pour une forte tension, avec un encombrement et une masse réduits compte tenu de la force de contention exercée.

La notion de contention s'entend ici comme la mise en compression des faces latérales d'un module d'accumulateur électrochimique.

Le lien de cerclage est constitué d'une boucle de matériau souple, c'est-à-dire qu'il a une forme d'anneau fermé. Le dispositif selon l'invention ne requiert pas de mécanisme de serrage de type boucle, où les extrémités d'un lien en forme de sangle doivent être engagées par plusieurs tours ou saisies dans des fentes. Le lien de cerclage est engagé sur le module d'accumulateur de manière extrêmement simple : en disposant au moins une boucle de matériau souple autour du module, de sorte que la portion centrale exerce une contention au moins sur une plaque de contention, et en engageant au moins l'un des coudes d'attache sur le charriot mobile.

L'invention est particulièrement adaptée à l'utilisation d'un lien souple textile en forme de boucle, qui présente de nombreux avantages pour cette application, mais qui ne sont pas compatibles avec les dispositifs de contention de l'art antérieur.

Les liens textiles tels que les tresses textiles réalisées en fibres techniques (aramide, par exemple) présentent une faible masse, une limite de rupture extrêmement élevée, autorisant des forces de serrage très importantes, un faible allongement (de moins de 5 %, voire de l'ordre de 1 %). Ces tresses techniques sont de plus électriquement isolantes, ce qui est un élément de sécurité pour une batterie de tension élevée comme celles des batteries de véhicules électriques (dont la tension est généralement de l'ordre de 400 V).

Le lien de cerclage présente alors l'avantage d'être très compact, isolant électriquement, et très robuste à la traction tout en ayant une faible élasticité, caractéristique importante pour assurer une compression homogène pendant toute la durée de vie de la batterie.

Un tel dispositif de contention bénéficie d'une mise en place aisée et sans risque électrique, ce qui lui permet d'être mis en œuvre dans des accumulateurs électrochimiques de forte tension même à proximité des bornes de connexion. Les accumulateurs électrochimiques utilisés dans les véhicules électriques, par exemple, présentent à la fois des bornes de connexion délivrant un niveau de tension qui représente un danger, et une configuration confinée avec peu d'espace pour la disposition des moyens de contention.

Des accumulateurs électrochimiques de forte tension et de forte densité d'énergie peuvent ainsi être mis en œuvre avec une force de contention élevée, et ce de manière flexible et modulaire en permettant de plus un démontage aisé qui augmente la réparabilité de l'ensemble.

Le dispositif selon l'invention exerce une force de contention sur le module d'accumulateur, par un guidage (par exemple en translation) par rapport à l'une des plaques de contention, et non en exerçant une tension relative entre deux extrémités d'un lien de contention ouvert, comme c'est le cas généralement dans l'art antérieur.

Le dispositif selon l'invention permet par ailleurs un serrage simultané de deux brins de cerclage entourant le module d'accumulateurs, là où les dispositifs de l'art antérieur nécessitent deux sangles et les deux boucles de serrage associées, ce qui entraine un gain de poids, une simplification du procédé de serrage et de desserrage, un gain de cout, et une meilleure fiabilité.

De plus, le serrage des deux brins de cerclage s'équilibre lui-même durant le serrage. La compression est alors homogène sur les plaques de compression.

Selon un mode de réalisation, le charriot mobile est intégré à la plaque de contention correspondante, c'est-à-dire à la plaque de contention par rapport à laquelle il est mobile.

Un important gain de compacité est ainsi permis, le module d'accumulateur ne présentant ainsi pas de boucles ou mécanismes externes souvent proéminents dans l'art antérieur.

Le dispositif de contention selon l'invention peut comporter les caractéristiques additionnelles, seules ou en combinaison, mentionnées dans les revendications 2 et suivantes.

### PRÉSENTATION DES FIGURES

D'autres caractéristiques et avantages de l'invention ressortiront de la description non limitative qui suit, en référence aux dessins annexés dans lesquels :
- La figure 1 illustre schématiquement un module d'accumulateur selon l'invention ;
- la figure 2 est une vue schématique en coupe verticale du module d'accumulateur de la figure 1 ;
- la figure 3 est une vue en perspective d'un module d'accumulateur avec un dispositif de contention selon un premier mode de réalisation de l'invention ;
- la figure 4 est une vue de face du module d'accumulateur de la figure 3 ;
- la figure 5 est une vue en coupe d'une plaque de contention du module d'accumulateur de la figure 3 ;
- la figure 6 représente le charriot mobile du module d'accumulateur de la figure 3;
- la figure 7 représente un dispositif de contention selon un deuxième mode de réalisation de l'invention ;
- la figure 8 illustre un dispositif de contention selon un troisième mode de réalisation de l'invention ;
- la figure 9 illustre un dispositif de contention selon un quatrième mode de réalisation de l'invention.

### DESCRIPTION DÉTAILLÉE

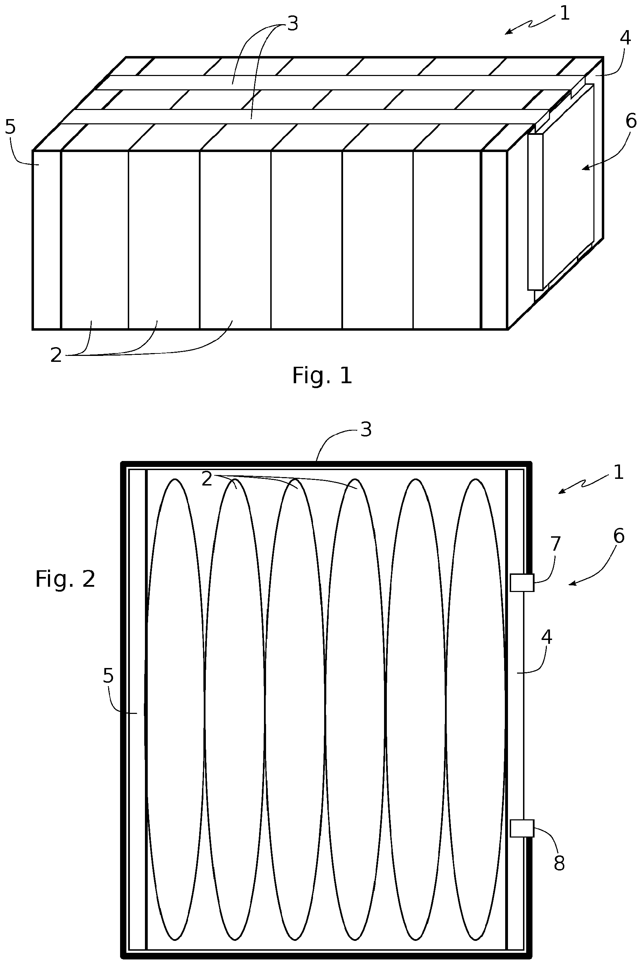

La figure 1 est une vue schématique de principe d'un module d'accumulateur 1 électrochimique selon l'invention. Ce module d'accumulateur 1 est composé, dans le présent exemple, de six cellules 2 juxtaposées.

Le module d'accumulateur 1 comporte un dispositif de contention qui comprend un lien de cerclage 3 entourant le module d'accumulateur 1 et exerçant une force de contention sur ce dernier. Le dispositif de contention comporte également une première plaque de contention 4, une deuxième plaque de contention 5, et un mécanisme de serrage 6.

Le dispositif de contention exerce sa fonction en pressant l'ensemble des cellules 2 entre les deux plaques de contention 4, 5, grâce au lien de cerclage 3 fortement serré.

Le mécanisme de serrage 6 est figuré sur la vue schématique de la figure 1 par une simple plaque, et sera décrit en détail plus loin. Le mécanisme de serrage 6 peut être positionné sur l'une des plaques de contention 4, 5, ou sur chacune des plaques de contention 4, 5, en étant éventuellement intégré à ces plaques de contention.

Le lien de cerclage 3 comporte au moins deux brins à section de type sangle (comme illustré) ou alternativement il peut comporter plus de deux brins, et sa section peut être circulaire, carrée, etc.

La figure 2 est une vue en coupe verticale du module d'accumulateur 1 de la figure 1. Les cellules 2 peuvent être constituées chacune d'éléments prismatiques empilables, ou de sachets souples. Les plaques de contention 4, 5 sont des plaques rigides permettant le serrage de ces cellules 2. Le lien de cerclage 3 entoure le module d'accumulateur 1 en partant d'un premier terminal de maintien 7 jusqu'à un deuxième terminal de maintien 8. Le mécanisme de serrage 6 intègre ces terminaux 7,8 et des moyens permettant leur rapprochement.

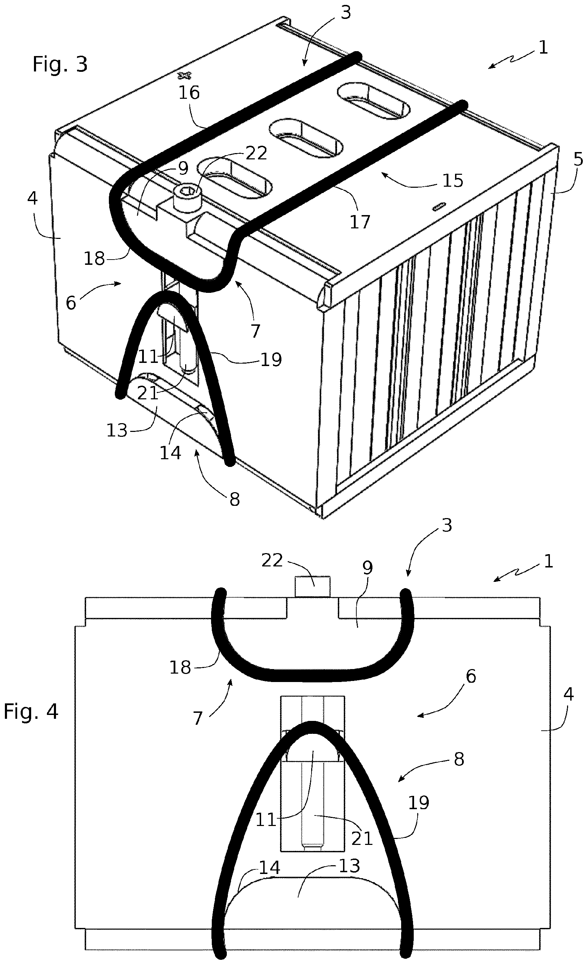

La figure 3 est une vue en perspective d'une réalisation détaillée du module d'accumulateur 1, selon un premier mode de réalisation, et la figure 4 représente ce module d'accumulateur 1 vu de face. Dans le présent exemple, le lien de cerclage 3 est constitué d'une seule boucle de matériau souple qui est réalisée par une tresse de textile technique, tel que l'aramide, refermée sur elle-même.

Le premier terminal de maintien 7 est réalisé par un bossage 9 saillant de la surface d'une première plaque de contention 4. Le bossage 9 est conformé pour présenter une face de contact 10 arrondie, permettant le maintien du lien de cerclage 3 sans endommagement.

Le deuxième terminal de maintien 8 comporte quant à lui :
- un bossage 13, similaire au bossage 9, et comportant également une face de contact 14 adaptée à recevoir sur ses bords le lien de cerclage 3 ;
- un charriot mobile 11 comportant également une face de contact 12 de forme arrondie, permettant la réception et le maintien sans dommage du lien de cerclage 3.

La boucle unique de matériau souple qui constitue le lien de cerclage 3 est ici agencée selon une portion centrale 15 formée de deux brins 16, 17, et deux portions d'extrémité qui forment des coudes d'attache 18, 19.

Le bossage 13 du deuxième terminal de maintien 8 permet d'obtenir le même écartement entre les brins 16, 17, que le bossage 9 du premier terminal de maintien 7.

Le premier coude d'attache 18 est monté sur le bossage 9 et le deuxième coude d'attache 19 est monté sur le charriot 11 et sur les rebords du bossage 13. Les deux brins 16, 17 s'étendent ainsi parallèlement l'un à l'autre sur les différentes faces du module d'accumulateur 1, entre les deux coudes d'attache 18, 19.

La portion centrale 15 du lien de cerclage 3 s'étend ainsi (les deux brins 16, 17 étant parallèles) sur la face supérieure du module d'accumulateur 1, sur la deuxième plaque de contention 5, et sur la face inférieure du module d'accumulateur 1.

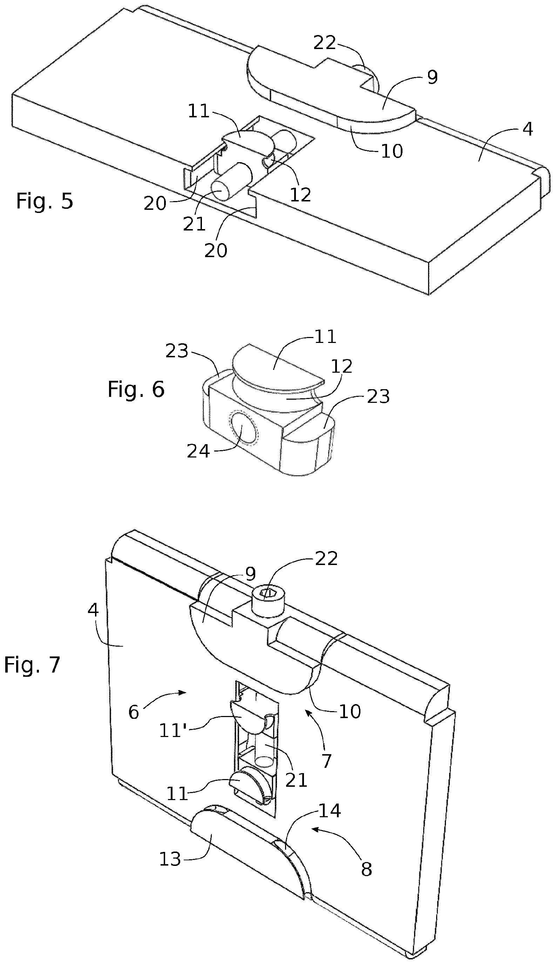

Le charriot 11 est mobile par rapport à la première plaque de serrage 4 pour permettre le serrage du lien de cerclage 3. La figure 5 est une vue en perspective et en coupe horizontale de la première plaque de contention 4, montrant le montage du charriot 11, et la figure 6 est une vue du charriot 11 seul.

Dans le présent exemple, le charriot 11 est intégré à la première plaque de contention 4. Le charriot 11 est monté coulissant dans deux glissières 20 pratiquées dans l'épaisseur de la première plaque de contention 4, et réalisées ici par des gorges usinées.

Le charriot 11 est en liaison hélicoïdale par rapport à la plaque de contention 4 correspondante grâce à une vis 21 dont la tête 22 est facilement accessible sur le dessus du module d'accumulateur 1. La rotation de la vis 21 entraine un rapprochement ou un éloignement du charriot 11 par rapport au bossage 9.

Le charriot 11 comporte des coulisseaux 23 engagés dans les glissières 20 ainsi qu'un alésage fileté 24 pour la coopération avec la vis 21.

Le deuxième terminal de maintien 8 comporte ainsi un moyen de tension adapté à repousser le charriot mobile 11 en direction du premier terminal de maintien 7.

De préférence, la face de contact 12 du charriot 11 présente une double courbure pour d'une part former un support arrondi au lien de cerclage 3, et d'autre part pour épouser la section ronde du lien de cerclage 3 (la boucle de matériau souple étant ici une tresse textile de section circulaire).

La mise en place et le serrage du lien de cerclage 3 s'effectuent par les opérations suivantes :
- conformer la boucle de matériau souple constituant le lien de cerclage 3 en deux brins 16, 17 parallèles, avec deux coudes d'attache 18, 19 aux extrémités ;
- engager le premier coude d'attache 18 sur le bossage 9 ;
- étendre les deux brins 16, 17 parallèlement en entourant le module d'accumulateur 1, jusqu'à en faire le tour ;
- engager le deuxième coude d'attache 19 sur le charriot 11, en l'écartant latéralement sur le bossage 13.

La vis 21 est ensuite actionnée pour rapprocher le charriot 11 du bossage 9, et serrée jusqu'à la force souhaitée. Cette force de serrage peut-être calibrée simplement par le couple appliqué sur la tête 22. Durant cette opération de serrage, les deux brins 16, 17 sont serrés simultanément et de manière équilibrée.

Optionnellement, les faces supérieure et inférieure du module d'accumulateur 1, et/ou la deuxième plaque de contention 5, sont munies de logements de guidage pour le trajet des brins 16, 17.

La figure 7 illustre un deuxième mode de réalisation du dispositif de contention dans lequel le mécanisme de serrage 6 est intégré à la première plaque de contention 4, et dans lequel le deuxième terminal de maintien 8 comporte un charriot mobile supplémentaire 11'.

Selon ce deuxième mode de réalisation, la rotation de la vis 21 permet le rapprochement ou l'éloignement des charriots 11, 11', grâce à un pas de vis inversé sur les charriots 11, 11'.

Le premier coude d'attache 18 du lien de cerclage 3 est alors mis en position sur le charriot 11 tandis que le deuxième coude d'attache 19 est mis en position sur le charriot mobile supplémentaire 11'. Les deux bossages 9, 13 ont ici la même fonction d'écartement à une largeur prédéterminée des brins 16, 17.

Une tension symétrique sur la boucle de matériau souple constituant le lien de cerclage 3 est ainsi appliquée et limite les contraintes de frottement induites lors de la mise en tension de cette boucle, moyennant une légère augmentation de la complexité du mécanisme.

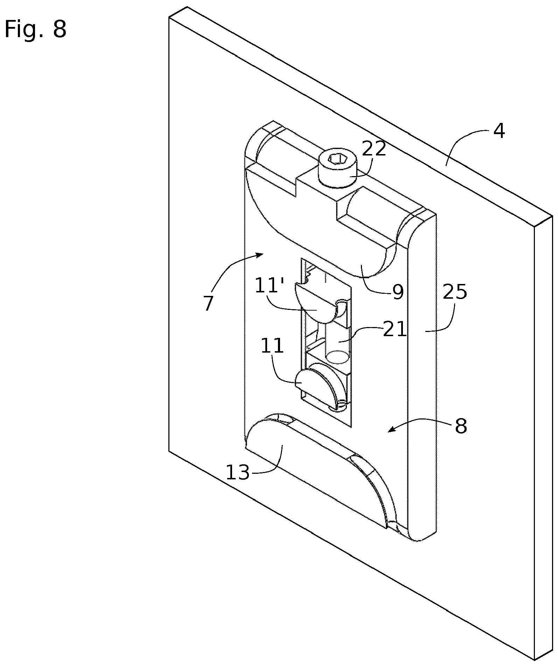

La figure 8 illustre un troisième mode de réalisation de l'invention dans lequel le dispositif de contention comporte un mécanisme de serrage 6 qui est non pas intégré dans une plaque de contention mais qui est simplement rapporté à la première plaque de contention 4.

Le mécanisme de serrage 6 comporte ici une plaque de support 25 qui comporte tous les éléments pour cette fonction de serrage (dans cet exemple, les mêmes éléments que le deuxième mode de réalisation) : les bossages 9, 13 et les charriots 11, 11' commandés par la vis 21.

La plaque de support 25 est rapportée sur la plaque de contention 4 par collage, fixation mécanique, ou tout autre moyen adapté. La plaque de support 25 peut également être rapportée sur la plaque de contention 4 simplement par la tension du lien de cerclage 3. Ce mode de réalisation ne présente pas autant d'avantages en matière d'encombrement et de simplification que les deux premiers modes de réalisation, mais rend possible son intégration sur des modules d'accumulateur 1 existants.

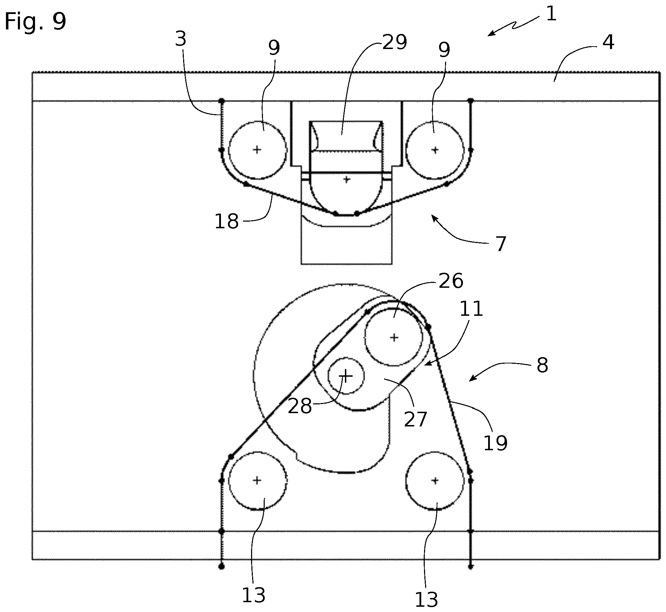

La figure 9 est une vue de face similaire à la figure 4, pour un quatrième mode de réalisation de l'invention, dans lequel le charriot 11 est mobile, non plus en translation, mais grâce à un mécanisme de came.

Le charriot 11 est ici constitué d'un doigt de serrage 26 présentant une face de contact glissante ou tournante (roulement, matériau autolubrifant, etc.) pour le lien de cerclage 3. Le doigt 26 est fixé sur une came 27 qui est mobile en rotation autour d'un axe 28 entre deux positions angulaires extrêmes :
- une position angulaire extrême de desserrage dans laquelle le doigt 26 est éloigné au maximum du premier terminal de maintien 7 ;
- une position angulaire extrême de serrage (celle représentée à la figure 9) dans laquelle le doigt 26 est rapproché du premier terminal de maintien 7 dans une position stable.

Le premier terminal de maintien 7 comporte également ici des bossages 9 permettant le maintien d'un écartement prédéterminé des deux brins 16, 17, et il en est de même pour le deuxième terminal de maintien 8 qui comporte des bossages 13 pour maintenir ce même écartement.

Le premier terminal de maintien 7 comporte de plus une tête amovible 29 de calibrage permettant d'adapter le serrage appliqué par le charriot mobile à une application particulière.

La mise en place du lien de cerclage 3 se fait en sélectionnant tout d'abord une tête amovible 29 adaptée à l'application en question. Différentes têtes amovibles 29 peuvent en effet être montées sur un premier terminal de maintien 7, chacune présentant une épaisseur différente, correspondant à des positionnements différents du premier coude d'attache 18. Des têtes amovibles plus ou moins épaisses pourront éloigner plus ou moins le premier coude d'attache 18 du doigt 26 (lorsque la came 27 est dans sa position angulaire extrême de serrage).

La sélection d'une tête amovible 29 correspond à la sélection d'un écartement prédéterminé entre le premier coude d'attache 18 et le deuxième coude d'attache 19, pour garantir une force de serrage souhaitée pour le lien de cerclage 3.

Une fois la tête amovible 29 sélectionnée et mise en place, le premier coude d'attache 18 est mis en place sur cette tête amovible 29 et sur les bords des bossages 9.

Le deuxième coude d'attache 19 est ensuite mis en place sur le doigt 26 du charriot 11 (la came 27 étant dans sa position angulaire extrême de desserrage).

La came 27 est ensuite pivotée jusqu'à sa position angulaire extrême de serrage et la force de serrage souhaitée sur le lien de cerclage 3 est atteinte sans nécessiter aucun réglage ni précaution particulière de la part de l'utilisateur.

Des variantes de réalisation du dispositif de contention et du module d'accumulateur 1 peuvent être envisagées. Par exemple, le lien de cerclage peut être constitué de deux boucles séparés de matériau souple avec :
- un premier coude d'attache de la première boucle de matériau souple qui est monté sur un bossage de la première plaque de contention 4, et un deuxième coude d'attache qui est monté sur un bossage de la deuxième plaque de contention 5 ;
- un premier coude d'attache de la deuxième boucle de matériau souple qui est monté sur un autre bossage de la deuxième plaque de contention 5, et un deuxième coude d'attache qui est monté sur un autre bossage de la première plaque de contention 4.

Les deux plaques de contention peuvent également comporter toutes deux un mécanisme de serrage 6, qu'il soit intégré ou rapporté.

## Revendications

1. Dispositif de contention pour module d'accumulateur (1) électrochimique prismatique ou en sachets souples, ce dispositif de contention comportant une première plaque de contention (4), une deuxième plaque de contention (5), un lien de cerclage (3), et un mécanisme de serrage (6), ce dispositif de contention étant **caractérisé en ce que** : le lien de cerclage (3) comporte au moins une boucle de matériau souple qui comprend une portion centrale (15) formée de deux brins (16,17), et deux portions d'extrémité formant un premier coude d'attache (18) et un deuxième coude d'attache (19) ; et **en ce que** le mécanisme de serrage (6) comporte deux terminaux de maintien (7,8), chaque coude d'attache (18,19) étant crocheté sur un desdits terminaux de maintien (7,8), au moins l'un des coudes d'attache (18,19) étant monté sur un charriot mobile (11).

2. Dispositif selon la revendication 1, **caractérisé en ce que** la boucle de matériau souple est réalisée par une tresse textile.

3. Dispositif selon l'une des revendications précédentes, **caractérisé en ce que** le lien de cerclage (3) comporte une seule boucle de matériau souple.

4. Dispositif selon la revendication 3, **caractérisé en ce que** le premier coude d'attache (18) est crocheté sur un premier terminal de maintien (7) rapporté sur la première plaque de contention (4), et **en ce que** le deuxième coude d'attache (18) est crocheté sur un deuxième terminal de maintien (8) rapporté sur la première plaque de contention (4), le deuxième terminal de maintien (8) comportant ledit charriot mobile (11).

5. Dispositif selon l'une des revendications 3 ou 4, **caractérisé en ce que** les deux brins (16,17) de la portion centrale (15) de la boucle de matériau souple entourent la deuxième plaque de contention (5).

6. Dispositif selon l'une des revendications précédentes, **caractérisé en ce que** les deux brins (16,17) de la portion centrale (15) de la boucle de matériau souple sont disposés parallèlement, à distance l'un de l'autre.

7. Dispositif selon l'une des revendications précédentes, **caractérisé en ce que** chaque terminal de maintien (7,8) comporte un moyen d'écartement des brins (16,17) de la portion centrale (15) de la boucle de matériau souple.

8. Dispositif selon l'une des revendications 4 à 7, **caractérisé en ce que** le premier terminal de maintien (7) comporte un bossage (9) muni d'une face de contact (10) pour le coude d'attache (18), ce bossage (9) étant saillant de la première plaque de contention (4).

9. Dispositif selon l'une des revendications 4 à 8, **caractérisé en ce que** le deuxième terminal de maintien (8) comporte un bossage (13) muni d'une face de contact (14) pour le coude d'attache (19), ce bossage (13) étant saillant de la première plaque de contention (4).

10. Dispositif selon l'une des revendications 4 à 9, **caractérisé en ce que** le deuxième terminal de maintien (8) comporte un moyen de tension (21) adapté à repousser le charriot mobile (11) en direction du premier terminal de maintien (7).

11. Dispositif selon l'une des revendications 4 à 10, **caractérisé en ce que** le premier terminal de maintien (7) comporte un charriot mobile supplémentaire (11') sur lequel est crocheté le premier coude d'attache (18) de la boucle de matériau souple.

12. Dispositif selon l'une des revendications précédentes, **caractérisé en ce que** le charriot mobile (11) est intégré à la plaque de contention (4) correspondante.

13. Dispositif selon la revendication 12, **caractérisé en ce que** le charriot mobile (11) comporte des coulisseaux (23) engagés dans des glissières (20) pratiquées dans l'épaisseur de ladite plaque de contention (4).

14. Dispositif selon l'une des revendications 1 à 12, **caractérisé en ce que** le charriot mobile (11) est monté sur une plaque de support (25) qui est rapportée sur la plaque de contention correspondante.

15. Dispositif selon l'une des revendications précédentes, **caractérisé en ce que** le charriot mobile (11) comporte une came (27) présentant une première position angulaire extrême de montage et une deuxième position angulaire extrême de serrage.

16. Dispositif selon la revendication 15, **caractérisé en ce que** l'un des terminaux de maintien (7,8) comporte une tête amovible (29) de calibrage de la force de serrage.

17. Module d'accumulateur (1) électrochimique prismatique ou en sachets souples, **caractérisé en ce qu'**il comporte un dispositif de contention selon l'une des revendications 1 à 16.
